# EUROPEAN PATENT SPECIFICATION

(11) **EP 3 574 362 B1**
(45) Date of publication and mention of the grant of the patent: **28.10.2026**
(21) Application number: 18745164.6
(22) Date of filing: 03.01.2018
(51) Int. Cl.: G02B 27/01, G02B 17/08, G02B 27/28, G02B 27/30, G02B 27/42, G02B 27/00

(54) **A HEAD UP DISPLAY WITH AN ANGLED LIGHT PIPE**
HEAD-UP-ANZEIGE MIT EINEM ABGEWINKELTEN HOHLLICHTLEITER
AFFICHAGE TÊTE HAUTE AVEC UN CONDUIT DE LUMIÈRE INCLINÉ

(30) Priority: 26.01.2017 US 201762451041 P; 10.02.2017 US 201715429569
(43) Date of publication of application: 04.12.2019
(73) Proprietor: Rockwell Collins, Inc., Cedar Rapids, IA 52498 (US)
(72) Inventor: BROWN, Robert D., Lake Oswego, Oregon 97035 (US); STRATTON, Eric P., Portland, Oregon 97209 (US)
(74) Representative: Dehns
(86) International application number: PCT/US2018/012227
(87) International publication number: WO 2018/140198

(56) References cited:
- WO-A1-2009/077774
- WO-A1-2016/044193
- JP-A- 2016 030 503
- US-A1- 2016 178 901
- US-B1- 8 749 890
- US-B1- 9 523 852

## Description

### CROSS REFERENCE TO RELATED APPLICATIONS

The present application claims the benefit of and priority to U.S. Application Serial No. 15/429,569 (Attorney Docket No. 17FD158 (047141-1237)) filed on February 10, 2017, entitled "A HEAD UP DISPLAY WITH AN ANGLED LIGHT PIPE" and U.S. Provisional Patent Application Serial No. 62/451,041, (Attorney Docket No. 17FD 158P (047141-1236)) filed on January 26, 2017, entitled "A HEAD UP DISPLAY (HUD) USING A LIGHT PIPE WITH ANGLED ORIENTATION WITH RESPECT TO THE COMBINER AND MICRO COLLMATOR SYSTEM AND METHOD FOR A HEAD UP DISPLAY (HUD)".

### BACKGROUND

Embodiments of the inventive concepts disclosed herein relate to substrate guided displays including but not limited to head up displays (HUDs), such as, fixed HUDs and worn displays (e.g., head worn displays, helmet mounted displays, virtual glasses).

HUDs provide significant safety and operational benefits including precise energy management and conformal flight paths. These safety and operational benefits are enjoyed by operators of air transport aircraft, military aircraft, regional aircraft and high end business jets where HUDs are generally employed. These safety and operational benefits are also desirable in smaller aircraft.

Conventional HUDs are generally large, expensive and difficult to fit into smaller aircraft, such as, business and regional jets as well as general aviation airplanes. Often, conventional HUDs rely on large optical components to form adequate field of view and viewing eye box. The large optical components are often associated with collimating or non-collimating projectors and include lens, prisms, mirrors, etc. The volume of the packages including the optical components of the HUD is too large to fit within the constrained space in the cockpit of smaller aircraft. Further, conventional HUDs rely upon optical components which are generally too expensive for the cost requirements of smaller aircraft and worn displays.

Substrate guided HUDs have been proposed which use waveguide technology with diffraction gratings to preserve eye box size while reducing size of the HUD. U.S. Patent No. 4,309,070 issued St. Leger Searle and U.S. Patent No. 4,711,512 issued to Upatnieks disclose substrate waveguide HUDs. U.S. Patent No. 8,634, 139 discloses a catadioptric collimator for HUDs.

### SUMMARY

In one aspect, embodiments of the inventive concepts disclosed herein relate to a head up display as defined by claim 1.

In a further aspect, embodiments of the inventive concepts disclosed herein relate to a method of providing information to a user, as defined by claim 9.

In a still further aspect, embodiments of the inventive concepts disclosed herein relate to a head up display as defined by claim 13.

### BRIEF DESCRIPTION OF THE DRAWINGS

Exemplary embodiments of the inventive concepts disclosed herein are described with reference to the accompanying drawings, wherein like numerals denote like elements; and:
FIG. 1 is a top view schematic drawing of a head up display (HUD) display system in accordance with some exemplary embodiments of the inventive concepts disclosed herein;
FIG. 2 is a perspective view schematic drawing of the HUD system illustrated in FIG. 1,
FIG. 3 is a top view schematic drawing of a head up display (HUD) display system in accordance with some exemplary embodiments of the inventive concepts disclosed herein;
FIG. 4 is a perspective view schematic drawing of the HUD system illustrated in FIG. 3,
FIG. 5 is a top view schematic drawing of a head up display (HUD) display system in accordance with some exemplary embodiments of the inventive concepts disclosed herein;
FIG. 6 is a perspective view schematic drawing of the HUD system illustrated in FIG. 5,
FIG. 7 is a top view schematic drawing of a head up display (HUD) display system in accordance with some exemplary embodiments of the inventive concepts disclosed herein; and
FIG. 8 is a perspective view schematic drawing of the HUD system illustrated in FIG. 7.

### DETAILED DESCRIPTION

Before describing embodiments of the inventive concepts disclosed herein in detail the, it should be observed that the inventive concepts disclosed herein include, but are not limited to, a novel structural combination of optical components and not in the particular detailed configurations thereof. Accordingly, the structure, methods of manufacture and use, functions, control and arrangement of components have been illustrated in the drawings by readily understandable block representations and schematic drawings, in order not to obscure the disclosure with structural details which will be readily apparent to those skilled in the art, having the benefit of the description herein. Further, the inventive concepts disclosed herein are not limited to the particular embodiments depicted in the exemplary diagrams, but should be construed in accordance with the language in the claims.

In some embodiments, a head up display (HUD) is designed using a light pipe that does not suffer from less than desirable refractive index differences between the light pipe and the planar waveguide. In some embodiments, the light pipe is separated from the planar waveguide by an airgap and is not attached to planar waveguide with an adhesive as conventional wisdom dictates. The separation between the two optical components reduces constraints on planarity between the two optical components, thereby making the device easier to manufacture and test because the two optical components can be tested separately in some embodiments. Poor co-planarity in conventional systems can cause double images. In some embodiments, the light pipe uses a two grating design (an input grating and output grating) and does not use a turning grating or reflective array, thereby reducing drawbacks in the field of view due to very high skew ray angles in light pipe. In some embodiments, the HUD achieves a field of view (FOV) of greater than 36 degrees (circular or square) which is greater than a conventional 25 degree circular or square FOV.

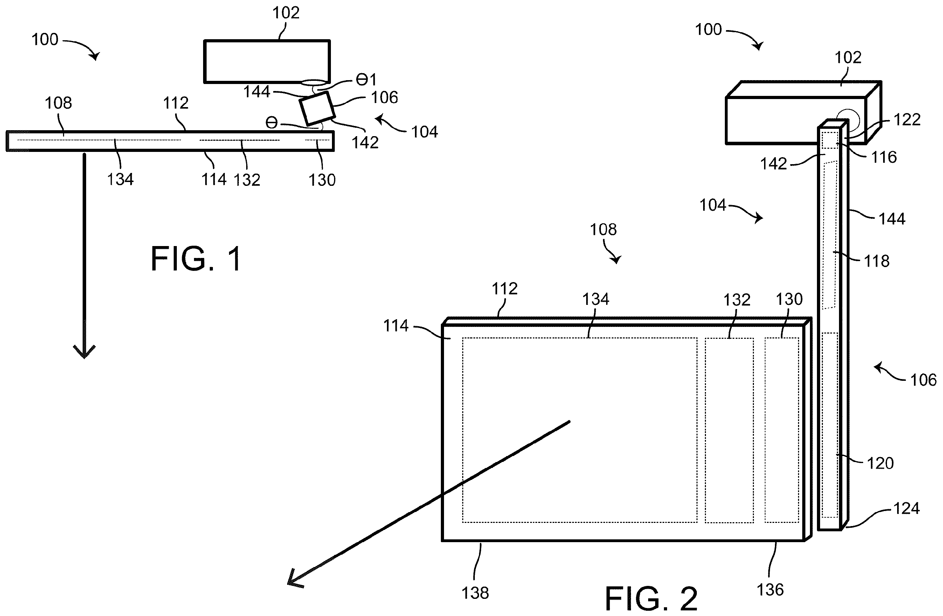

With reference to FIGS. 1 and 2, a head up display (HUD) system 100 can be utilized in various applications, including aviation, medical, naval, targeting, ground based, military, etc. The term HUD as used herein refers to a fixed HUD, a near eye display, a worn display, a helmet mounted display or any type of display using a combiner for overlaying images from an image source over a real world scene.

The HUD system 100 is configured for use in smaller cockpit environments and in worn display applications and yet provides an appropriate field of view and eye box for avionic applications in some embodiments. The HUD system 100 can be configured for use with worn components, such as, glasses, goggles, hats, helmets, etc. or be a HUD system with a fixed combiner in some embodiments. The HUD system 100 can have a variety of sizes and have a variety of display areas. A worn version of the HUD system 100 can have a display area of 40 centimeter squared or less, and a fixed version of the HUD system 100 can have a display area of more than 50 centimeters squared.

As shown in the embodiment of FIGS. 1 and 2, the HUD system 100 includes a projector 102 and a waveguide system 104. The projector 102 provides light (an image) to the substrate waveguide system 104 which operates as a combiner. As shown in the embodiment of FIGS. 1 and 2, the waveguide system 104 includes a light pipe 106 and a waveguide combiner 108. The substrate waveguide system 104 is a transparent combiner for viewing the real world scene through main surfaces or sides 112 and 114 of the waveguide combiner 108. The sides 112 and 114 are planar, flat surfaces. The waveguide system 104 achieves close to a 90 degree angle between the two directions of pupil expansion and therefore provides a compact and high efficiency system with large unvignetted eye box with dispersion compensation in some embodiments. In some embodiments, the light enters the light pipe 106 as collimated light and leaves the light pipe 106 and the waveguide combiner 108 as collimated light.

As shown in the embodiment of FIGS. 1 and 2, the light pipe 106 is a glass elongated rectangular prism with four elongated sides and two square or rectangular ends. The material for the light pipe 106 has a high index of refraction (e.g., greater than 1.5 in some embodiments) (e.g., 1.52). Other suitable optical materials can be used for the light pipe 106. The light pipe 106 includes an input grating 116, a beam splitter 118, and an output grating 120. The waveguide combiner 108 is a glass or plastic material having a high index of refraction (e.g., greater than 1.5 in some embodiments) (e.g., 1.52). The waveguide combiner 108 includes an input grating 130, a beam splitter 132, and an output grating 134.

In operation, the HUD system 100 provides images from the projector 102 via the waveguide system 104 to a pilot or other operator so that the pilot or other operator simultaneously views the images and a real world scene in some embodiments. The images can include graphic and/or text information (e.g., flight path vector) related to avionic information in some embodiments. In addition, the images can include synthetic or enhanced vision images. In some embodiments, collimated light is provided to the waveguide system 104 so that the pilot can view the image conformally on the real world scene through the waveguide system 104.

The projector 102 includes an image source and collimating optics in some embodiments. The projector 102 provides an image from the image source and collimates the image via collimating optics for display through the waveguide system 104. The projector 102 can be a collimating optical system. The projector 102 can use light emitting diode (LED) illumination, or can be a digital light projector-based (DLP-based), projector, a liquid crystal on silicon-based (LCOS-based) projector, or a laser-based projector in some embodiments. In some embodiments, the projector 102 is a monochrome projector or a color projector using a separate waveguide system 104 for each color.

As shown in the embodiment of FIGS. 1 and 2, the projector 102 and the user are disposed on respective opposing sides 112 and 114 of the waveguide combiner 108. The light pipe 106 is disposed between the projector 102 and the main side 112 of the waveguide combiner 108.

The input grating 116 of the light pipe 106 is disposed on an end portion 122 of faces or surfaces 142 or 144 (or surfaces parallel to the surfaces 142 and 144) of the light pipe 106 in some embodiments. As shown in the embodiment of FIGS. 1 and 2, the surfaces 142 and 144 are two of the four elongated surfaces of the light pipe 106 and are parallel to each other. The beam splitter 118 is disposed in the light pipe 106 perpendicular to the faces or surfaces 142 and 144 and between the input grating 116 and the output grating 120. The output grating 120 is disposed near an end portion 124 of the light pipe 106. The input grating 116 and the output grating 120 are matched, reciprocal gratings in some embodiments. The input grating 116 and the output grating 120 are matched in spatial frequency (e.g., have the same period) in some embodiments. The light from the projector 102 is diffracted into the light pipe 106 by the input grating 116 and propagates down the light pipe 106 by total internal reflection until it reaches the output grating 120 where it is ejected from the light pipe 106 to the input grating 130 of the waveguide combiner 108.

As shown in the embodiment of FIGS. 1 and 2, the waveguide combiner 108 is a rectangular prism with four elongated sides and two ends. The main sides 112 and 114 are two of the four elongated surfaces. The waveguide combiner 108 includes the input grating 130 disposed on a top portion 136 of main sides 112 or 114 (or a surface parallel to the sides 112 or 114) of the waveguide combiner 108 in some embodiments. The beam splitter 132 is disposed in the waveguide combiner 108 parallel with the sides 112 and 114 and between the input grating 130 and the output grating 134. The output grating 134 is disposed at a bottom portion 138 of the waveguide combiner 108 on the sides 112 and 114 (or their parallel) in some embodiments. The input grating 130 and the output grating 134 are matched, reciprocal gratings in some embodiments. The input grating 130 and the output grating 134 are matched in spatial frequency in some embodiments. The light from the output grating 120 of the light pipe 106 is diffracted into the waveguide combiner 108 by the input grating 130 and propagates down the waveguide 108 by total internal reflection until it reaches the output grating 134 where it is ejected from the waveguide combiner 108 toward the user.

The input gratings 116 and 130 and the output gratings 120 and 134 can be placed on or within the local planes of the light pipe 106 and the waveguide combiner 108. The input gratings 116 and 130 and the output gratings 120 and 134 can include but are not limited to volume holograms, replicated gratings or surface relief gratings. In some embodiments, the input gratings 116 and 130 and the output gratings 120 and 134 are encapsulated gratings. The input gratings 116 and 130 and the output gratings 120 and 134 are reflection type or transmission type gratings in some embodiments. In some embodiments, the output gratings 120 and 134 are rolled-K-vector output gratings. Rolled K-vector output gratings include volumetric diffraction gratings with different K vectors and the same grating period in some embodiments.

By making the gratings reciprocal, highly skewed rays are prevented from diffracting. The design only needs to consider the fields coming from the input couplers that are incident on the output couplers at the same angles they left the input couplers. The use of turning gratings, as used in other conventional systems, relies on the ability of the turning grating to efficiently diffract skew rays. In practice, gratings fail to perform well when the skew angle exceeds 45 degrees, especially at the higher angles >70 degrees. This puts limitations on the total FOV that can be viewed with a waveguide system containing a turning grating.

In some embodiments, an air gap or low index of refraction material is disposed between the light pipe 106 and the waveguide combiner 108. The provision of the air gap provides a higher numerical aperture (NA) which results in a larger field of view. NA= square root (*n*²_{light pipe} - *n*²ₐᵢᵣ) where: *n*_{light pipe} is the index of refraction of the glass material associated with the light pipe (e.g., greater than 1.52, and equal to approximately 1.6 in some embodiments); and *n*ₐᵢᵣ is the index of refraction associated with the air gap (e.g., 1.0). If the light pipe 106 is adhered to the waveguide combiner 108, the NA is decreased because the adhesive and material associated with the waveguide combiner 108 have a higher index of refraction than air. The refractive index of the adhesive is greater than 1.33 in some systems. The field of view is increased by approximately 50 percent using the HUD system 100 with an air gap in some embodiments.

In addition, the air gap between the light pipe 106 and the waveguide combiner 108 increases the alignment tolerances by orders of magnitude and allows for an angle to be disposed between an elongated surface (the surface 142) of the light pipe 106 and the sides 112 and 114 of the waveguide combiner 108. Light pipe 106 can advantageously be built and tested separately from the waveguide combiner 108 due to the separation. Further, rotating the light pipe 106 with respect to the waveguide combiner 108 enables a new degree of freedom in aligning the desired field of view within the numerical aperture of the light pipe 106 which improves field of view. In some embodiments, planar waveguide combiners can be angled strategically for better fit into aircraft or other environments.

As shown in the embodiment of FIGS. 1 and 2, an angle θ between the elongated surfaces 142 and 144 of the light pipe 106 and the sides 112 and 114 is between 0 and plus or minus 45 degrees (e.g., between 5 and 25 degrees). In some embodiments, the angle θ1 between the output lens of the projector 102 and the light pipe 106 is similarly angled. In some embodiments, the angle θ1 between the output lens of the projector 102 and the light pipe 106 is a different angle than angle θ. In some embodiments, the angle between the output lens of the projector 102 and line normal to the elongated surface of the light pipe 106 is perpendicular. By rotating the light pipe 106 with respect to the waveguide combiner 108 and by aligning the output grating 120 correctly, fields of view are all sent down the waveguide system 104 in one mode which eliminates multiple images in the output field. The rotation allows the field of view to be set within the desired numerical aperture of the light pipe 106 in some embodiments.

A frame or bracket can be used to secure the light pipe 106 and the waveguide combiner 108 at the appropriate angle. In some embodiments, the bracket holds the light pipe 106 at its ends and the waveguide combiner 108 at its top or on its sides. The bracket is plastic or metal in some embodiments.

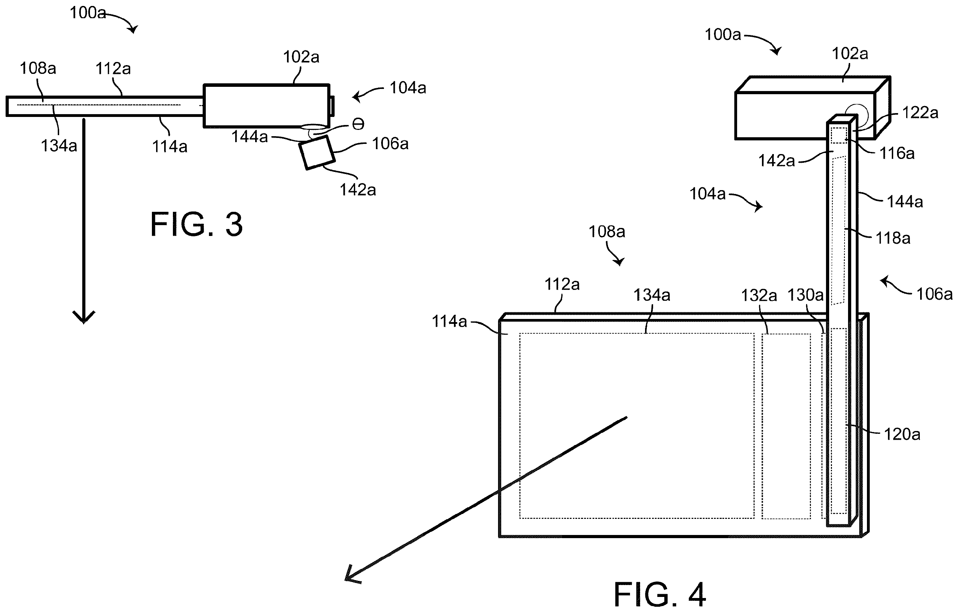

With reference to FIGS. 3 and 4, a HUD system 100a is similar to the HUD system 100. The HUD system 100a includes a projector 102a and substrate waveguide system 104a. The user is disposed on the side 114a of the waveguide combiner 108a in some embodiments. A light pipe 106a is disposed in front of (e.g., the user's side of) the main side 114a of the waveguide combiner 108a. The projector 102a and the waveguide combiner 108a are disposed behind the side 112a in some embodiments.

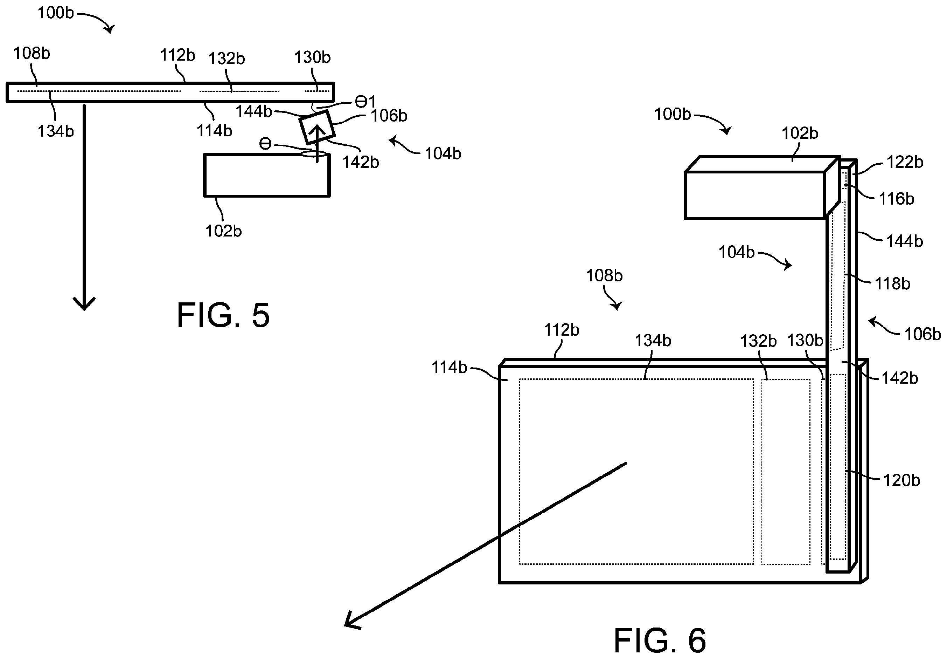

With reference to FIGS. 5 and 6, a HUD system 100b is similar to the HUD system 100. The HUD system 100b includes a projector 102b and substrate waveguide system 104b. The user is disposed on the side 112b of waveguide combiner 108b in some embodiments. A light pipe 106b is disposed between the main side 114b of the waveguide combiner 108b and the projector 102b. The elongated side 144b faces the main side 114b, and the elongated side 142b faces the output of the projector 102b.

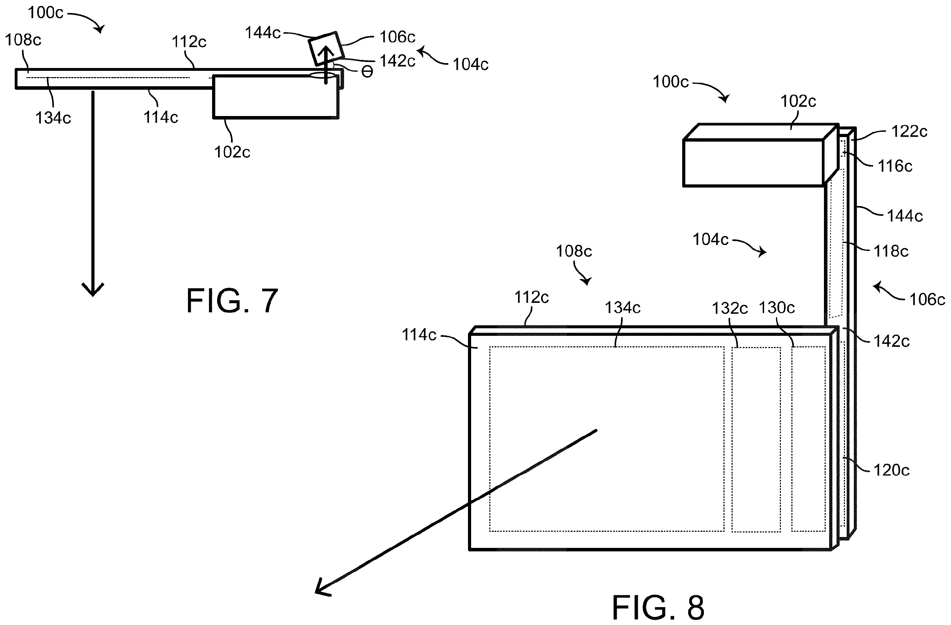

With reference to FIGS. 7 and 8, a HUD system 100c is similar to the HUD system 100. The HUD system 100c includes a projector 102c and a substrate waveguide system 104c. The user is disposed on the main side 114c of waveguide combiner 108c in some embodiments. A light pipe 106c is disposed behind the main side 112c of the waveguide combiner 108c, and the projector 102c is disposed in front of the elongated surface 142c of the light pipe 106c.

The HUD systems 100 and 100a-c can be rotated at any angle to provide different orientations (upside down, rotate 90 degrees, 270 degrees). The same reference numerals with different suffixes a-c in FIGS. 1-8 are intended to show components that have identical or similar structure and functionality. In some embodiments, the projector 102 is one of the projectors 30, 500, 700 and 750 described in Exhibit B of the provisional application incorporated herein by reference in its entireties. In some embodiments, the projector 102 is configured to provide an exit pupil between 3 mm and 5 mm in diameter and has a cubic beam splitter with a physical size of 4.5 mm to 15 mm per side for HWDs. In some embodiments, the projector 30 is configured to provide an exit pupil between 2 mm and 25 mm in diameter.

It is understood that while the detailed drawings, specific examples, material types, thicknesses, dimensions, and particular values given provide exemplary embodiments of the inventive concepts disclosed herein, the exemplary embodiments are for the purpose of illustration only. Various changes may be made to the details disclosed without departing from the scope of the inventions as defined by the following claims.

## Claims

1. A head up display (100), comprising:
a light pipe (106) configured to expand a pupil in a first direction and comprising an input grating (116) and an output grating (120), the light pipe (106) comprising four elongated surfaces comprising at least two elongated surfaces that are parallel to each other, wherein the input grating and the output grating are provided in one or more planes parallel to the two parallel elongated surfaces or on at least one of the two parallel elongated surfaces; and
a waveguide combiner (108) in optical communication with the light pipe (106) and comprising a main surface disposed at an angle of more than 5 degrees and less than 25 degrees with respect to the two parallel elongated surfaces, the waveguide combiner (108) being configured to expand the pupil in a second direction along the main surface perpendicular to the first direction.

2. The head up display (100) of claim l, wherein the waveguide combiner (108) is spaced apart from the light pipe (106).

3. The head up display (100) of claim 2, wherein the input grating (116) and the output grating (120) are matched.

4. The head up display (100) of claim 3, wherein the input grating (116) and the output grating (120) are reciprocal.

5. The head up display (100) of claim l, wherein the waveguide combiner (108) comprises an input grating (116) and an output grating (120), wherein the input grating (116) and the output grating (120) are provided in one or more planes parallel to the main surface or on the main surface.

6. The head up display (100) of claim l, further comprising:
a collimator disposed in front of the input grating (116) of the light pipe (106).

7. The head up display (100) of claim 6, wherein the light pipe (106) and the waveguide combiner (108) are part of a head worn display.

8. The head up display (100) of claim 7, wherein the light pipe (106) comprises a first beam splitter disposed between the input and output gratings of the light pipe, the first beam splitter being disposed in a plane perpendicular to the two parallel elongated surfaces, and wherein the waveguide combiner (108) comprises two main surfaces, an input grating, an output grating, and a second beam splitter disposed between the input and output gratings of the waveguide combiner (108), and wherein the input and output gratings of the waveguide combiner (108) are disposed in a plane parallel to the main surface.

9. A method of providing information to a user, the method comprising:
providing light from a projector (102);
providing the light from the projector (102) to a light pipe (106) and expanding a pupil in a first direction in the light pipe (106); and
providing the light from the light pipe (106) to a waveguide combiner (108) having a main surface, wherein the light pipe (106) has an elongated surface disposed at an angle of more than 5 degrees and less than 25 degrees and spaced apart from the main surface of the waveguide combiner (108).

10. The method of claim 9, wherein the light pipe (106) comprises an input grating and an output grating associated with the elongated surface.

11. The method of claim 10, wherein the input grating and the output grating are matched reciprocal gratings.

12. The method of claim 9, further comprising:
diffracting light out of the waveguide combiner (108) and expanding the pupil in a second direction perpendicular to the first direction.

13. A head up display system (100), comprising:
at least one light pipe (106) having four elongated surfaces, wherein a first pair of the elongated surfaces are parallel to each other and a second pair of the elongated surfaces are perpendicular to the first pair of the elongated surfaces; and
a waveguide combiner (108) having a main surface for viewing an image and an input grating, the waveguide combiner (108) being disposed such that the first pair of the elongated surfaces are spaced apart from and disposed at an angle of more than 5 degrees and less than 25 degrees with respect to the main surface of the waveguide combiner (108), wherein the at least one light pipe (106) is configured to expand a pupil in a first direction and provide light to the input grating of the waveguide combiner (108), the waveguide combiner (108) being configured to expand the pupil in a second direction on the main surface.

14. The head up display system (100) of claim 13, wherein the at least one light pipe (106) comprises a volumetric input grating and a volumetric output grating.

15. The head up display system (100) of claim 13, wherein the output grating is a reciprocal grating to the input grating.

16. The head up display system (100) of claim 13, further comprising a collimator.

17. The head up display system (100) of claim 14, wherein the waveguide combiner (108) comprises a first beam splitter disposed between the input grating on the waveguide combiner (108) and an output grating on the waveguide combiner (108) and wherein the light pipe (106) comprises a second beam splitter disposed between the volumetric input grating and the volumetric output grating.

18. The head up display system (100) of claim 13, wherein the head up display system (100) is a fixed head up display or a head worn display.

19. The head up display system (100) of claim 14, wherein the volumetric output grating is a rolled k vector output grating.

## Patentansprüche

1. Head-up-Display (100), umfassend:
einen Lichtleiter (106), der zum Aufweiten einer Pupille in einer ersten Richtung ausgelegt ist und ein Eingangsgitter (116) und ein Ausgangsgitter (120) umfasst, wobei der Lichtleiter (106) vier längliche Flächen umfasst, die mindestens zwei längliche Flächen umfassen, die parallel zueinander sind, wobei das Eingangsgitter und das Ausgangsgitter in einer oder mehreren Ebenen parallel zu den zwei parallelen länglichen Flächen oder auf mindestens einer der zwei parallelen länglichen Flächen angeordnet sind; und
einen Wellenleiter-Combiner (108), der in optischer Verbindung mit dem Lichtleiter (106) steht und eine Hauptfläche umfasst, die in einem Winkel von mehr als 5 Grad und weniger als 25 Grad in Bezug auf die zwei parallelen länglichen Flächen angeordnet ist, wobei der Wellenleiter-Combiner (108) zum Aufweiten der Pupille in einer zweiten Richtung entlang der Hauptfläche senkrecht zu der ersten Richtung ausgelegt ist.

2. Head-up-Display (100) nach Anspruch 1, wobei der Wellenleiter-Combiner (108) von dem Lichtleiter (106) beabstandet ist.

3. Head-up-Display (100) nach Anspruch 2, wobei das Eingangsgitter (116) und das Ausgangsgitter (120) angepasst sind.

4. Head-up-Display (100) nach Anspruch 3, wobei das Eingangsgitter (116) und das Ausgangsgitter (120) reziprok sind.

5. Head-up-Display (100) nach Anspruch 1, wobei der Wellenleiter-Combiner (108) ein Eingangsgitter (116) und ein Ausgangsgitter (120) umfasst, wobei das Eingangsgitter (116) und das Ausgangsgitter (120) in einer oder mehreren Ebenen parallel zu der Hauptfläche oder auf der Hauptfläche angeordnet sind.

6. Head-up-Display (100) nach Anspruch 1, ferner umfassend:
einen Kollimator, der vor dem Eingangsgitter (116) des Lichtleiters (106) angeordnet ist.

7. Head-up-Display (100) nach Anspruch 6, wobei der Lichtleiter (106) und der Wellenleiter-Combiner (108) Teil eines am Kopf getragenen Displays sind.

8. Head-up-Display (100) nach Anspruch 7, wobei der Lichtleiter (106) einen ersten Strahlteiler umfasst, der zwischen dem Eingangsgitter und dem Ausgangsgitter des Lichtleiters angeordnet ist, wobei der erste Strahlteiler in einer Ebene senkrecht zu den zwei parallelen länglichen Flächen angeordnet ist, und wobei der Wellenleiter-Combiner (108) zwei Hauptflächen, ein Eingangsgitter, ein Ausgangsgitter und einen zweiten Strahlteiler umfasst, der zwischen dem Eingangsgitter und dem Ausgangsgitter des Wellenleiter-Combiners (108) angeordnet ist, und wobei das Eingangsgitter und das Ausgangsgitter des Wellenleiter-Combiners (108) in einer Ebene parallel zu der Hauptfläche angeordnet sind.

9. Verfahren zum Bereitstellen von Informationen für einen Benutzer, wobei das Verfahren umfasst:
Bereitstellen von Licht von einem Projektor (102);
Zuführen des Lichts von dem Projektor (102) zu einem Lichtleiter (106) und Aufweiten einer Pupille in einer ersten Richtung in dem Lichtleiter (106); und
Zuführen des Lichts von dem Lichtleiter (106) zu einem Wellenleiter-Combiner (108), der eine Hauptfläche aufweist, wobei der Lichtleiter (106) eine längliche Fläche aufweist, die in einem Winkel von mehr als 5 Grad und weniger als 25 Grad angeordnet und von der Hauptfläche des Wellenleiter-Combiners (108) beabstandet ist.

10. Verfahren nach Anspruch 9, wobei der Lichtleiter (106) ein Eingangsgitter und ein Ausgangsgitter umfasst, die der länglichen Fläche zugeordnet sind.

11. Verfahren nach Anspruch 10, wobei das Eingangsgitter und das Ausgangsgitter angepasste reziproke Gitter sind.

12. Verfahren nach Anspruch 9, ferner umfassend:
Beugen von Licht aus dem Wellenleiter-Combiner (108) und Aufweiten der Pupille in einer zweiten Richtung senkrecht zu der ersten Richtung.

13. Head-up-Display-System (100), umfassend:
mindestens einen Lichtleiter (106), der vier längliche Flächen aufweist, wobei ein erstes Paar der länglichen Flächen parallel zueinander ist und ein zweites Paar der länglichen Flächen senkrecht zu dem ersten Paar der länglichen Flächen ist; und
einen Wellenleiter-Combiner (108), der eine Hauptfläche zum Betrachten eines Bildes und ein Eingangsgitter aufweist, wobei der Wellenleiter-Combiner (108) so angeordnet ist, dass das erste Paar der länglichen Flächen von der Hauptfläche des Wellenleiter-Combiners (108) beabstandet und in einem Winkel von mehr als 5 Grad und weniger als 25 Grad in Bezug auf die Hauptfläche des Wellenleiter-Combiners (108) angeordnet ist, wobei der mindestens eine Lichtleiter (106) ausgelegt ist, eine Pupille in einer ersten Richtung aufzuweiten und dem Eingangsgitter des Wellenleiter-Combiners (108) Licht zuzuführen, wobei der Wellenleiter-Combiner (108) ausgelegt ist, die Pupille in einer zweiten Richtung auf der Hauptfläche aufzuweiten.

14. Head-up-Display-System (100) nach Anspruch 13, wobei der mindestens eine Lichtleiter (106) ein volumetrisches Eingangsgitter und ein volumetrisches Ausgangsgitter umfasst.

15. Head-up-Display-System (100) nach Anspruch 13, wobei das Ausgangsgitter ein reziprokes Gitter zu dem Eingangsgitter ist.

16. Head-up-Display-System (100) nach Anspruch 13, ferner umfassend einen Kollimator.

17. Head-up-Display-System (100) nach Anspruch 14, wobei der Wellenleiter-Combiner (108) einen ersten Strahlteiler umfasst, der zwischen dem Eingangsgitter auf dem Wellenleiter-Combiner (108) und einem Ausgangsgitter auf dem Wellenleiter-Combiner (108) angeordnet ist, und wobei der Lichtleiter (106) einen zweiten Strahlteiler umfasst, der zwischen dem volumetrischen Eingangsgitter und dem volumetrischen Ausgangsgitter angeordnet ist.

18. Head-up-Display-System (100) nach Anspruch 13, wobei das Head-up-Display-System (100) ein feststehendes Head-up-Display oder ein am Kopf getragenes Display ist.

19. Head-up-Display-System (100) nach Anspruch 14, wobei das volumetrische Ausgangsgitter ein Ausgangsgitter mit gerolltem k-Vektor ist.

## Revendications

1. Affichage tête haute (100), comprenant :
un conduit de lumière (106) configuré pour dilater une pupille dans une première direction et comprenant un réseau d'entrée (116) et un réseau de sortie (120), le conduit de lumière (106) comprenant quatre surfaces allongées comprenant au moins deux surfaces allongées parallèles entre elles, dans lequel le réseau d'entrée et le réseau de sortie sont disposés dans un ou plusieurs plans parallèles aux deux surfaces allongées parallèles ou sur au moins l'une des deux surfaces allongées parallèles ; et
un combinateur de guide d'ondes (108) en communication optique avec le conduit de lumière (106) et comprenant une surface principale disposée à un angle de plus de 5 degrés et de moins de 25 degrés par rapport aux deux surfaces allongées parallèles, le combinateur de guide d'ondes (108) étant configuré pour dilater la pupille dans une seconde direction le long de la surface principale perpendiculaire à la première direction.

2. Affichage tête haute (100) selon la revendication 1, dans lequel le combinateur de guide d'ondes (108) est espacé du conduit de lumière (106).

3. Affichage tête haute (100) selon la revendication 2, dans lequel le réseau d'entrée (116) et le réseau de sortie (120) sont adaptés.

4. Affichage tête haute (100) selon la revendication 3, dans lequel le réseau d'entrée (116) et le réseau de sortie (120) sont réciproques.

5. Affichage tête haute (100) selon la revendication 1, dans lequel le combinateur de guide d'ondes (108) comprend un réseau d'entrée (116) et un réseau de sortie (120), dans lequel le réseau d'entrée (116) et le réseau de sortie (120) sont disposés dans un ou plusieurs plans parallèles à la surface principale ou sur la surface principale.

6. Affichage tête haute (100) selon la revendication 1, comprenant en outre :
un collimateur disposé devant le réseau d'entrée (116) du conduit de lumière (106).

7. Affichage tête haute (100) selon la revendication 6, dans lequel le conduit de lumière (106) et le combinateur de guide d'ondes (108) font partie d'un affichage porté sur la tête.

8. Affichage tête haute (100) selon la revendication 7, dans lequel le conduit de lumière (106) comprend un premier séparateur de faisceau disposé entre les réseaux d'entrée et de sortie du conduit de lumière, le premier séparateur de faisceau étant disposé dans un plan perpendiculaire aux deux surfaces allongées parallèles, et dans lequel le combinateur de guides d'ondes (108) comprend deux surfaces principales, un réseau d'entrée, un réseau de sortie et un second séparateur de faisceau disposé entre les réseaux d'entrée et de sortie du combinateur de guides d'ondes (108), et dans lequel les réseaux d'entrée et de sortie du combinateur de guides d'ondes (108) sont disposés dans un plan parallèle à la surface principale.

9. Procédé de fourniture d'informations à un utilisateur, le procédé comprenant :
la fourniture d'une lumière à partir d'un projecteur (102) ;
la fourniture de la lumière à partir du projecteur (102) vers un conduit de lumière (106) et la dilatation d'une pupille dans une première direction dans le conduit de lumière (106) ; et
la fourniture de la lumière à partir du conduit de lumière (106) vers un combinateur de guide d'ondes (108) ayant une surface principale, dans lequel le conduit de lumière (106) a une surface allongée disposée à un angle de plus de 5 degrés et de moins de 25 degrés et espacée de la surface principale du combinateur de guide d'ondes (108).

10. Procédé selon la revendication 9, dans lequel le conduit de lumière (106) comprend un réseau d'entrée et un réseau de sortie associés à la surface allongée.

11. Procédé selon la revendication 10, dans lequel le réseau d'entrée et le réseau de sortie sont des réseaux réciproques adaptés.

12. Procédé selon la revendication 9, comprenant en outre :
la diffraction de la lumière hors du combinateur de guide d'ondes (108) et la dilatation de la pupille dans une seconde direction perpendiculaire à la première direction.

13. Système d'affichage tête haute (100), comprenant :
au moins un conduit de lumière (106) ayant quatre surfaces allongées, dans lequel une première paire de surfaces allongées sont parallèles entre elles et une seconde paire de surfaces allongées sont perpendiculaires à la première paire de surfaces allongées ; et
un combinateur de guides d'ondes (108) ayant une surface principale pour visualiser une image et un réseau d'entrée, le combinateur de guides d'ondes (108) étant disposé de telle sorte que la première paire de surfaces allongées sont espacées et disposées à un angle de plus de 5 degrés et de moins de 25 degrés par rapport à la surface principale du combinateur de guides d'ondes (108), dans lequel l'au moins un conduit de lumière (106) est configuré pour dilater une pupille dans une première direction et fournir de la lumière au réseau d'entrée du combinateur de guides d'ondes (108), le combinateur de guides d'ondes (108) étant configuré pour dilater la pupille dans une seconde direction sur la surface principale.

14. Système d'affichage tête haute (100) selon la revendication 13, dans lequel l'au moins un conduit de lumière (106) comprend un réseau d'entrée volumétrique et un réseau de sortie volumétrique.

15. Système d'affichage tête haute (100) selon la revendication 13, dans lequel le réseau de sortie est un réseau réciproque au réseau d'entrée.

16. Système d'affichage tête haute (100) selon la revendication 13, comprenant en outre un collimateur.

17. Système d'affichage tête haute (100) selon la revendication 14, dans lequel le combinateur de guides d'ondes (108) comprend un premier séparateur de faisceau disposé entre le réseau d'entrée du combinateur de guides d'ondes (108) et un réseau de sortie du combinateur de guides d'ondes (108), et dans lequel le conduit de lumière (106) comprend un second séparateur de faisceau disposé entre le réseau d'entrée volumétrique et le réseau de sortie volumétrique.

18. Système d'affichage tête haute (100) selon la revendication 13, dans lequel le système d'affichage tête haute (100) est un affichage tête haute fixe ou un affichage porté sur la tête.

19. Système d'affichage tête haute (100) selon la revendication 14, dans lequel le réseau de sortie volumétrique est un réseau de sortie vectoriel k enroulé.
